# EUROPEAN PATENT APPLICATION

(11) **EP 4 631 691 A1**
(43) Date of publication of application: **15.10.2025**
(21) Application number: 25163776.5
(22) Date of filing: 14.03.2025
(51) Int. Cl.: B29C 33/38, D21J 3/00, D21J 7/00

(54) **MOLD FOR MANUFACTURING OF A MOLDED FIBER PRODUCT**

(30) Priority: 10.04.2024 FI 20245450
(71) Applicant: Valmet Technologies Oy, 02150 Espoo (FI)
(72) Inventor: HAAVANLAMMI, Arto, 40101 Jyväskylä (FI); PAKKANEN, Jukka, 33710 Tampere (FI)
(74) Representative: Schmid, Wolfgang

(57) **Abstract**

The invention relates to a mold for manufacturing of a molded fiber product. The mold (10, 11) includes a product surface (18) surrounded by an excess area (19) at least one of those made at least partially porous by additive manufacturing. In the excess area (19) there are plurality of cavities (20) forming volume for fluid.

## Description

The present invention relates to a mold for manufacturing of a molded fiber product, which mold includes a product surface surrounded by an excess area at least one of those made at least partially porous by additive manufacturing.

EP-patent application number EP3985170A1 discloses a mold produced in an additive manufacturing process such as a 3D-printing process. At least a part of the product surface is in form of a layer without defined holes forming undefined mesh. This porous product surface makes the surface of the product smooth and precise. There is also an excess area surrounding the product surface. During forming of the product, the mold is filled with foamed fiber. So the blank including the product covers the whole mold surface area. The excess area can be made also porous which is resource efficient. During forming and especially during hot pressing it is important that excess fluid, mainly air, water and steam, is removed from the blank. However, the porous excess surface can have more efficient dewatering arrangement because the quality is not an issue when excess is cut away. But moist excess surface may interfere with product surface.

The object of the invention is to provide for manufacturing of a molded fiber product a new kind of mold, which has greater capacity for excess fluid than before. The characteristic features of the mold according to the invention are stated in the accompanying Claim 1. The properties of the mold can be easily varied and thereby achieving new porous structures and some combinations also. Porous means in this application minute interstices through which liquid, air or steam may pass via various undefined routes between mold particles fused together unlike in the perforation or hole which goes from one surface to an another as a defined channel. Besides, the mold is manufactured in less time thus saving the costs. In addition, the mold has good strength even when the shape of the mold can be complex. Also, the mold is easy to be cleaned. In addition, fluid is removed efficiently making the blank dryness higher.

The invention is described below in detail by referring to the enclosed drawings, which illustrate some of the embodiments of the invention, in which
- Figure 1a: shows a cross section of the pair of molds according to the invention for hot pressing of a molded fiber product,
- Figure 1b: shows a cross section of another pair of molds according to the invention for hot pressing of a molded fiber product,
- Figure 1c: shows a partial enlargement of the mold of Figure 1b,
- Figure 2a: shows a set of molds according to the invention seen above,
- Figure 2b: shows a partial enlargement of Figure 2a.

Molded fiber products, called also MFP are made from cellulose fibers. Such products are disposable cups or plates, for example. Cellulose fibers are first dispersed in water, then formed, drained, and dried. One specific way to manufacture molded fiber products is thermoforming. After forming, the product is pressed with high temperature and pressure, the combination of which drains and evaporates the water and moisture out of the product. Thus, no oven drying is needed and high quality is ready after manufacturing.

The forming and especially the pressing need two molds for each product, i.e., one negative and one positive. At least one of these must have a perforated or other way porous product surface for drainage. The mold is also called a tool. The product surface is the outer surface of the mold which contacts the product during manufacturing and gives the final shape to the product. Also, the water, steam, and air, i.e. fluid flow through the porous product surface during the forming and pressing.

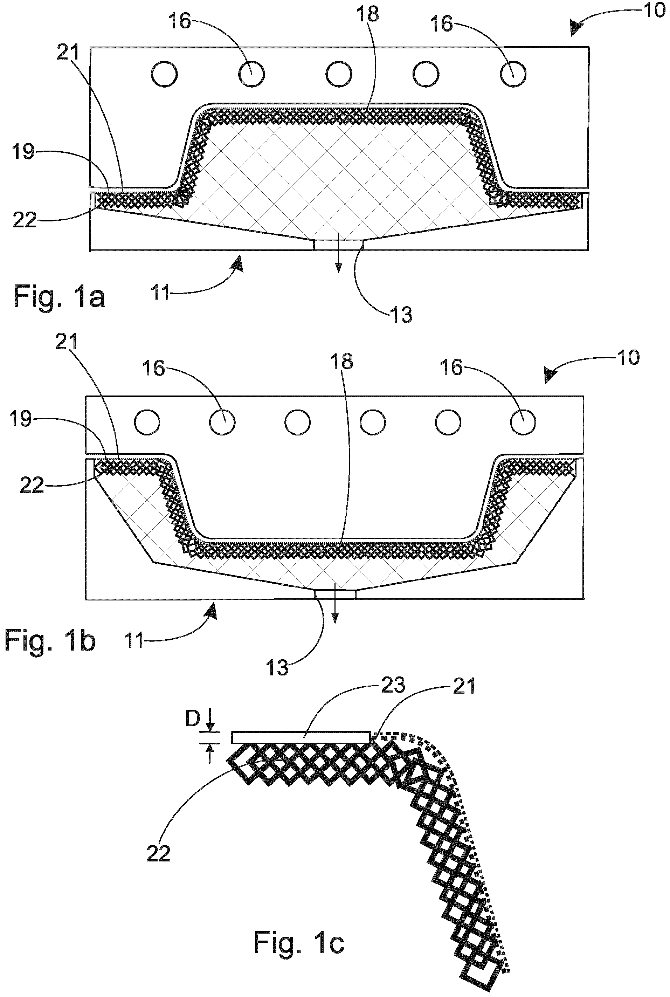

Figures 1a and 1b show two pairs of molds for hot pressing. Also there are means for heating the mold. Advantageously, the formed product is hot pressed twice, but more generally, the formed product is hot pressed from one to three times. In Fig. 1a the upper mold 11 is smooth and there are heating channels 16 increasing the performance of the tooling mold in a single print. In additive manufacturing the channels can be easily applied inside any part of the mold, like the supporting structures or the porous layer itself. Here, the lower mold 10 is porous, and fluid is drained through it via exit 13. In Fig. 1b the lower mold 11 is porous while the upper mold 11 is solid having also heating channels for heating up the mold. By these two molds both sides of the product will be smooth and dense. On the other hand, one mold may be porous while the other mold is perforated. In the first hot press both molds can have at least partially porous surface for fluid removal. The excess areas of said molds are advantageously arranged with void volume and connected to a vacuum source. The hot mold has dense support structure through the low vacuum volume for better heat conduction to the mold surface. Said surface and vacuum volume arrangement can be arranged also as a skin that is additive manufactured and placed over solid machined heated base mold base having vacuum connections.

The mold according to the invention is for manufacturing of a molded fiber product. The mold 11 includes a product surface 18 surrounded by an excess area 19 at least one of those made at least partially porous by additive manufacturing. According to the invention, in the excess area 19 there are plurality of cavities 20 forming volume for fluid. In other words, there is void volume for fluid. With the cavities, there is volume enough for fluid to escape. Thus the blank and thereby the final product has the moisture as designed.

The shape and the position of the cavities may vary. For example, the cavities 20 may be made by additive manufacturing. Thus the excess area is provided with the cavities during the additive manufacturing. On the other hand, the cavities 20 may be machined to the excess area 19 after additive manufacturing. In this way, the mold is first 3D-printed and then then the cavities are substracted from the surface of the excess area. Subtraction can be for example machining, grinding, shaving or electroerosion which are favorable for very narrow cavities. With mechanical machining the cavities are more accurate, and they can be positioned and shaped freely.

Like the product surface, the excess area 19 has a at least partially porous surface layer 21. Thus fibers will be screen on the surface of the mold while fluid goes through the surface layer. Under the surface layer is a perforated layer 22 which is more open for fluid to escape. Openings may be in form of holes or perforations or a lattice or a combination thereof.

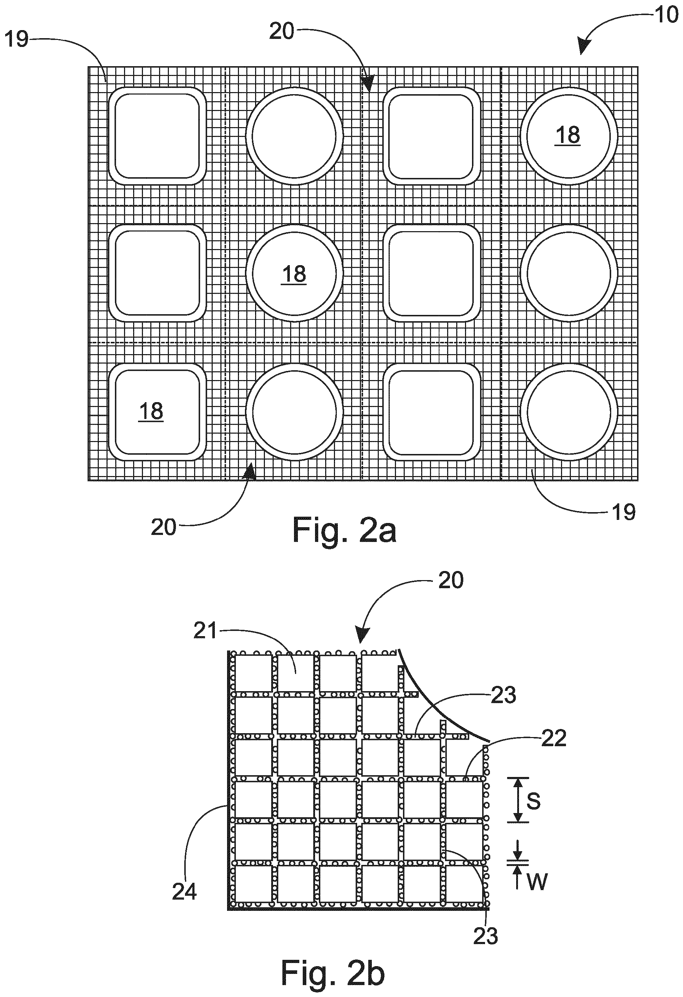

The thickness of the porous surface layer 21 is 0,5 - 5 mm, advantageously 0,5 - 2 mm. Even a thin layer is enough for keeping fibers from escaping but still letting fluid to escape. Advantageously, the cavity 20 reaches through the porous surface layer 21. In this way, the cavity opens to perforated structure like in Figure 2b. Thus fluid has plenty of volume to escape into.

Figure 2a shows twelve molds combined together. The shape of the final product may vary. Here each cavity 20 is in form of groove 23. Grooves are easy to machine with a CNC-milling machine. It has been noticed in production that even narrow grooves are sufficient. In practice, the width W of the groove 23 is 0,2 - 1,5 mm. At the same time, the depth D of the groove 23 is 0,1 - 3 mm. In this way, the groove will go through the porous surface layer and open to the perforated structure. Thus fluid has room for escaping. Here the grooves 23 are arranged in form of grid. This is easy to machine, and the volume is evenly distributed. However, the grooves may be diagonally, centrally, radially, product shape, in combination thereof or otherwise orientated. Also distribution of the volume may vary. In this way the volume may be optimized and designed freely. With additive manufacturing the cavities may also be independent of the next on like small circles or rectangles. These cavities or void volumes can be at least partially discontinuous.

In figures 2a and 2b the grid is regular with a distance S between the grooves 23 of 2 - 10 mm. This grid is quite tight, so there is a short way for fluid to end into volume. As mentioned earlier, the surface of the excess area 19 is machined after additive manufacturing. CNC-milling machine may be used. On the other hand also arc machining is possible especially for narrow cavities. In addition the arc machining is finless without blogging the porous surface layer.

Even the excess area has added volume, is the outer edge 24 of the mold 11 solid. In other words, the outer edge is nonperme-able to fluids. In this way, during hot pressing fluid will flow in a controlled manner to the volume without spreading to the surroundings. Added volume may be needed, especially in the hot pressing. So, the mold 11 is a hot-press mold. However, cavities may be used in forming molds also if needed.

The porosity of the porous layer is small enough to drain air and water out of the product during the forming and pressing, but to still hold the fibers on the product surface of the mold. In other words, the porous layer is capable of separating fibers from fluid. This is important when using foam where a mixture of fibers, water and air is led between two molds. In practice, foam is carrying the fibers for the forming. In foam forming technology aqueous foam instead of water slurry is used as a carrier medium in the manufacturing process of fiber-based products.

Solution according to invention is advantageous for foam forming hot presses. The specific molds have porous surface which is denser than prior art perforations or wire net solution but still open enough to let fluid drain out. Excess area void volume enhances the function of these specific molds. Additive manufacturing can in addition to build fine perforations, also achieve porous metal structures. Porous metal structures can be used instead of a defined perforation and mimic a very fine undefined mesh, dictated by process parameters of the 3D printer. In this way the overall porosity of the metal structures can be controlled even though their microstructures are undefined, unlike the prior art holes or perforation. Advantageously, the porous layer is on top of a supporting geometry, like the lattice as mentioned above. The porous layer is integral to the supporting geometry. Porous layer enables fluid to drain out, while leaving fibers on the top of the layer. Additive manufacturing enables optimized mold geometries tailored to the application and high flexibility in the production. Also foam forming is possible. In other words, the molds according to the invention are used for molded fiber products made of foamed fiber raw material. Thus, there is less water to drain compared to slurry. This shortens the time for forming and pressing. Simultaneously, less energy is spent.

## Claims

1. Mold for manufacturing of a molded fiber product, which mold (10, 11) includes a product surface (18) surrounded by an excess area (19) at least one of those made at least partially porous by additive manufacturing, **characterized in that** in the excess area (19) there are plurality of cavities (20) forming volume for fluid.

2. Mold according to claim 1, **characterized in that** the cavities (20) are made by additive manufacturing.

3. Mold according to claim 1, **characterized in that** the cavities (20) are substracted from the excess area (19) after additive manufacturing.

4. Mold according to any of claims 1 - 3, **characterized in that** the excess area (19) has a at least partially porous surface layer (21) supported by a perforated layer (22).

5. Mold according to claim 4, **characterized in that** the thickness of the porous surface layer (21) is 0,5 - 5 mm, advantageously 0,5 - 2 mm.

6. Mold according to claim 4 or 5, **characterized in that** the cavity (20) reaches through the porous surface layer (21).

7. Mold according to any of claims 1 - 6, **characterized in that** each cavity (20) is in form of groove (23).

8. Mold according to claim 7, **characterized in that** the width W of the groove (23) is 0,2 - 1,5 mm.

9. Mold according to claims 7 or 8, **characterized in that** the depth D of the groove (23) is 0,1 - 3 mm.

10. Mold according to any of claims 7 - 9, **characterized in that** the grooves (23) are arranged in form of grid.

11. Mold according to claim 10, **characterized in that** the grid is regular with a distance S between the grooves (23) of 2 - 10 mm.

12. Mold according to any of claims 1 - 11, **characterized in that** the surface of the excess area (19) is machined after additive manufacturing by arc machining.

13. Mold according to any of claims 1 - 12, **characterized in that** the outer edge (24) of the mold (11) is solid.

14. Mold according to any of claims 1 - 13, **characterized in that** the mold (11) is a hot-press mold.
